Europäisches Patentamt

European Patent Office

Office européen des brevets

(19)

(11) Numéro de publication: **0 262 997 B1**

(12) **FASCICULE DE BREVET EUROPÉEN**

(45) Date de publication de fascicule du brevet:
21.11.91

(51) Int. Cl.⁵: **G21C 3/32**

(21) Numéro de dépôt: **87401903.7**

(22) Date de dépôt: **19.08.87**

(54) **Assemblage de combustible nucléaire à grille d'extrémité libre.**

(30) Priorité: 28.08.86 FR 8612172

(43) Date de publication de la demande:
06.04.88 Bulletin 88/14

(45) Mention de la délivrance du brevet:
21.11.91 Bulletin 91/47

(84) Etats contractants désignés:
BE CH DE ES GB IT LI SE

(56) Documents cités:
EP-A- 0 088 675
EP-A- 0 214 895
CH-A- 449 130
DE-A- 2 428 980

(73) Titulaire: **FRAMATOME**
**Tour Fiat 1, Place de la Coupole**
**F-92400 Courbevoie(FR)**

Titulaire: **COMPAGNIE GENERALE DES MATIE-**
**RES NUCLEAIRES (COGEMA)**
**2, rue Paul Dautier B.P. 4**
**F-78141 Vélizy-Villacoublay(FR)**

(72) Inventeur: **Canat, Jean-Noel**
**75 Rue des Aqueducs**
**F-69005 Lyon(FR)**
Inventeur: **Pla, Joel**
**17 Bis rue Francis Chirat**
**F-69100 Villeurbanne(FR)**

(74) Mandataire: **Fort, Jacques et al**
**CABINET PLASSERAUD 84, rue d'Amsterdam**
**F-75009 Paris(FR)**

EP 0 262 997 B1

## Description

La présente invention concerne un assemblage combustible pour réacteur nucléaire du type comprenant un squelette comportant deux pièces d'extrémité liées par des éléments allongés tels que des tubes-guides, et plusieurs grilles comprenant une grille extrême supérieure, une grille extrême inférieure et des grilles intermédiaires, lesdites grilles formant des cellules de maintien d'un faisceau de crayons de combustible aux noeuds d'un régulier. Chacun desdits crayons est muni d'une gaine métallique fermée à chacune de ses extrémités par un bouchon étanche apte à coopérer avec une grille extrême correspondante.

Elle trouve une application particulièrement importante, bien que non exclusive, dans le domaine des assemblages pour réacteur nucléaire à eau sous pression, dits REP, pour lesquels les grilles intermédiaire implantées en partie courante de l'assemblage sont réalisées en alliage à base de zirconium dit "Zircaloy", matériau peu neutrophage et possédant de faibles caractéristiques mécaniques sous irradiation.

Dans les assemblages combustibles du type qui vient d'être décrit, les grilles remplissement plusieurs fonctions. Elles assurent la résistance aux chocs transversaux, elles permettant le mélange du réfrigérant, mais surtout elles supportent axialement et elles entretoisent les crayons de combustible contenant la matière fissile.

Deux types de conception sont possibles concernant ces grilles de maintien des crayons, sachant qu'elles doivent permettre des mouvements différentiels entre les éléments allongés faisant partie du squelette de l'assemblage et les crayons de combustible. La première consiste à rendre les grilles solidaires des crayons et la seconde consiste à rendre les grilles solidaires des éléments allongés appartenant au squelette.

De façon plus particulière, le document FR-A-2 088 009 montre un squelette rigide, formé de deux pièces d'extrémité parallèles, entretoisées par des tirants se répartissant régulièrement parmi le réseau de crayons de combustible en des noeuds de ce réseau, ces tirants étant sensiblement de même diamètre que les crayons. Les grilles d'entretoisement ne sont pas liées rigidement à ces tirants, mais agencées de façon à pouvoir glisser sur ceux-ci. Le nombre des crayons étant plus élevé que celui des tirants, les grilles suivent les crayons dans leurs mouvements résultant des dilatations différentielles en fonctionnement, en glissant sur ces tirants. L'assemblage décrit comprend des butées en forme de manchons coaxiaux aux tirants entre les différentes grilles de façon à limiter les déplacements de ces dernières au-delà de certaines limites prédéterminées. Ce type d'assemblage présente plusieurs inconvénients :

- le glissement des grilles supérieures sur les tirants peut devenir trop important, dans le cas où les allongements des crayons atteignent des valeurs conséquentes, et risque de poser des problèmes de guidage et de tenue du faisceau des crayons ainsi que d'usure des tirants ;
- il n'est pas possible d'utiliser, pour les grilles implantées en partie courant de l'assemblage, du zircaloy, de faible caractéristique mécanique ;
- les crayons du faisceau reposent sur la pièce inférieure de chaque assemblage qui constitue une butée, mais en aucun cas ne constitue un serrage suffisant permettant un maintien axial du crayon fissile.

La présente invention vise à fournir un assemblage combustible pour réacteur nucléaire répondant mieux que ceux antérieurement connus aux exigences de la pratique, notamment en ce qu'il permet d'utiliser un alliage peu neutrophage et à faibles caractéristiques mécaniques sous irradiation pour les grilles implantées en partie courante de l'assemblage tout en diminuant notablement l'effort de compression du crayon qui se développe lorsque celui-ci s'allonge, abaissant ainsi le niveau de déformation des crayons et du squelette de l'assemblage.

Dans ce but, l'invention propose notamment un assemblage combustible du type ci-dessus défini, caractérisé :

en ce qu l'une des deux grilles extrêmes est solidaire des bouchons de l'extrémité correspondante des crayons du faisceau qui la traversant et est liée aux éléments allongés constituant ainsi un point fixe à l'une des extrémités desdits crayons,

en ce que l'autre des deux grilles extrêmes est solidaire des bouchons à l'autre extrémité des crayons du faisceau et est apte à coulisser sur les éléments allongés, et

en ce que les grilles intermédiaires sont fixées auxdits éléments allongés et propres à laisser coulisser les crayons du faisceau, de telle sorte que les crayons puissent s'allonger librement à partir du point fixe.

L'invention propose également un assemblage combustible pour réacteur nucléaire caractérisé en ce que au moins un des bouchons étanches de chaque crayon du faisceau comporte une gorge et en ce que les cellules de maintien de ce faisceau appartenant à la grille extrême correspondante comportent au moins une lame flexible propre à venir s'insérer dans la gorge.

Dans un mode de réalisation avantageux, les cellules de maintien de la grille extrême comportent deux telles lames flexibles opposées.

L'invention propose également un assemblage combustible dans lequel l'une des deux grilles extrêmes est liée par friction aux bouchons.

On peut, par ailleurs, avoir recours à l'une des dispositions suivantes :

La grille extrême liée aux bouchons d'une extrémité des crayons du faisceau et solidaire des éléments allongés peut être la grille extrême inférieure ou supérieure, mais sera plus avantageusement la grille extrême inférieure.

Les grille intermédiaires peuvent être constituées en alliage à base de zirconium dit "Zircaloy", la grille d'extrémité fixée aux éléments allongés étant en un alliage à hautes caractéristiques mécaniques contenant du fer, du chrome et du nickel tels que ceux connus sous le nom "Inconel".

La grille d'extrémité libre sera plus avantageusement réalisée en "Zircaloy", mais peut être également en "Inconel", ou dans les deux matériaux.

L'invention sera mieux comprise à la lecture de la description qui suit d'un mode particulier de réalisation donné à titre d'exemple non limitatif. La description se réfère aux dessins qui l'accompagnent, dans lesquels :

- la figure 1 est une vue schématique, en élévation, d'un combustible pour réacteur nucléaire à eau légère sous pression comprenant des grilles selon l'invention ;
- la figure 2 donne une vue schématique en perspective de cet assemblage faisant mieux apparaître les caractéristiques de l'invention ;
- la figure 3 est une vue partielle à grande échelle montrant un bouchon de crayon est son système de fixation sur une grille extrême.

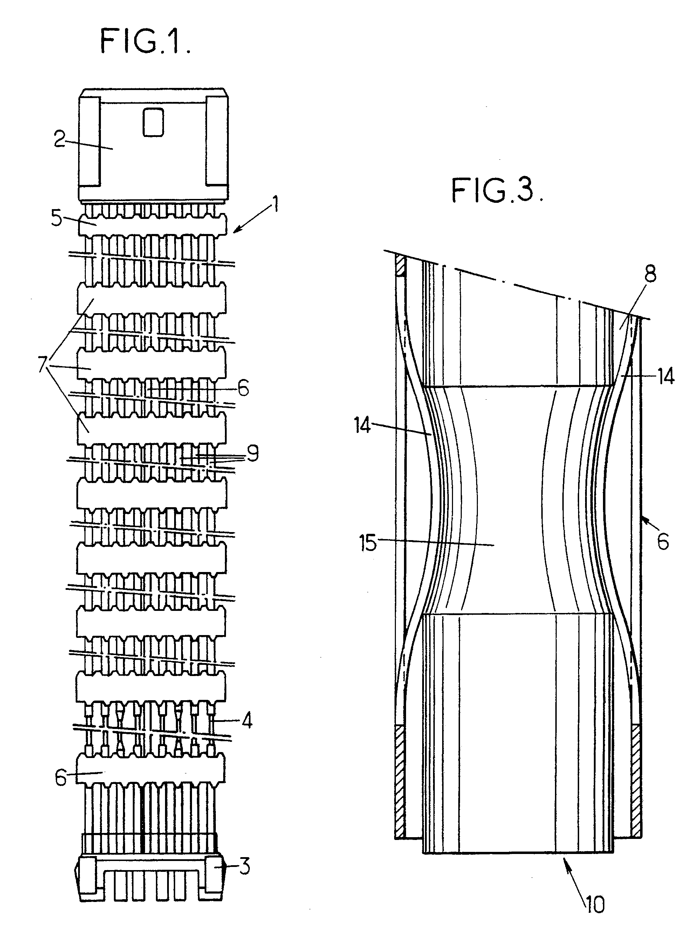

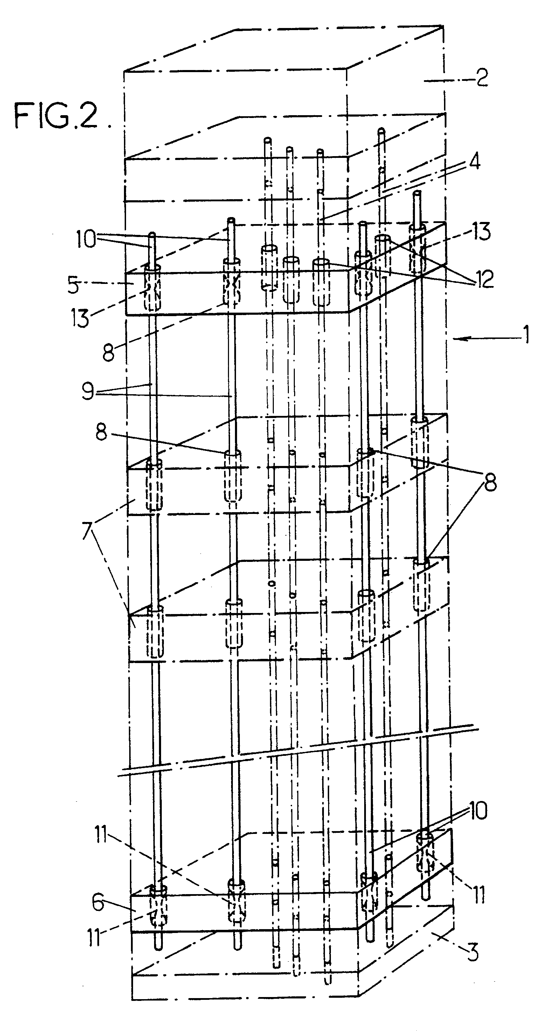

Les figures 1 et 2 montrent un assemblage combustible 1 comprenant un squelette comportant une pièce d'extrémité supérieure 2 et une pièce d'extrémité inférieure 3 liées par des tubes-guides 4 indiqués en traits mixtes sur la figure 2. L'assemblage 1 comporte une grille extrême supérieure 5 et une grille extrême inférieure 6 et des grilles intermédiaires 7. Les grilles forment des cellules de maintien 8 de crayons combustibles 9 aux noeuds d'un réseau régulier. Pour un assemblage combustible de réacteur à eau légère sous pression, le réseau régulier adopté est en général un réseau de pas carré, 17 x 17 noeuds. Chacun des crayons 9 est muni d'une gaine métallique fermée à ses extrémités par des bouchons 10 étanches aptes à coopérer avec les grilles extrêmes 5 et 6.

Chacune des deux grilles extrêmes est liée aux bouchons des extrémités correspondantes de crayons. Une de ces liaisons à été représentée sur la figure 2 par une réduction locale 11 du diamètre de la cellule de maintien de la grille inférieure. Pour la grille d'extrémité supérieure une liaison identique, ou usuelle sans diminution de diamètre, peut être envisagée.

Sur l'assemblage représenté pas la figure 2, les tubes-guides 4 sont solidaires des pièces d'extrémité 2 et 3, de la grille extrême inférieure 6 et des grilles intermédiaires 7. Par contre, la grille extrême supérieure 5 est apte à coulisser librement sur les tubes-guides qui la traversent dans les cellules 12 ménagées à cet effet.

Les crayons 9 sont liés à la grille extrême inférieure 6 et à la grille extrême supérieure 5. Ils coulissent librement dans les cellules de maintien 8 des grilles intermédiaires 7. La grille extrême 6, étant fixée d'une part à la structure de l'assemblage comprenant les pièces d'extrémité et les tubes-guides, et d'autre part aux crayons combustibles 9, constitue un point fixe pour les crayons. Le faisceau de ces crayons coulisse librement dans les cellules des grilles intermédaires et est fixé à la grille extrême supérieure 5, elle-même apte à coulisser librement le long des tubes-guides de la structure. Le faisceau de crayons peut ainsi s'allonger librement à partir du point fixe constitué par la grille extrême inférieure.

Les crayons peuvent être liés à l'une des grilles extrêmes par friction 13, de façon à permettre la dilatation différentielle des crayons les uns par rapport aux autres. Cette friction permet à un crayon de se déplacer lorsque les contraintes auxquelles il est soumis deviennent par trop importantes malgré le déplacement global de la grille extrême supérieure.

Il va de soi que le même résultat peut être obtenu en inversant les rôles joués par les grilles extrême inférieure et extrême supérieure.

En permettant au faisceau de crayons de se déplacer globalement à partir d'une point lors de l'allongement de ces crayons par suite d'augmentation de leur température et/ou irradiation, on ne génère pas d'effort antagoniste aux extrémités, supprimant ainsi le phénomène d'arcure de ces crayons tout en permettant un bon maintien latéral des crayons dans une zone où ceux-ci sont fortement sollicités par les effets de l'écoulement du fluide primaire du réacteur. La grille d'extrémité libre permet donc de disposer d'un assemblage dans lequel les contraintes générées par le grandissement des crayons sur les crayons eux-mêmes et sur la structure de l'assemblage sont en bonne partie supprimées, diminuant ainsi le risque d'arcure global de l'assemblage.

La structure de l'assemblage ne subit pas notamment de déformation qui serait gênante lors de sa manutention après irradiation à la sortie de coeur et dans la suite du cycle que l'on fait suivre au combustible. La grille extrême fixe inférieure ou supérieure est avantageusement constituée en "Inconel", matériau qui permet de garantir tout au long de la vie du combustible un serrage suffisant du crayon fissile. Par contre, les grilles implantées en partie courante de l'assemblage et la grille fixe peuvent être en "Zircaloy"' matériau peu neutrophage mais aux faibles caractéristiques mécaniques sous irradiation, car, on ne leur demande qu'un entretoisement des crayons.

La figure 3 montre un mode de fixation d'un bouchon 10 de crayon 9 appartenant à un assemblage selon l'invention, à une grille d'extrémité 6 inférieure. Le bouchon 10 traverse la grille 6 dans la cellule de maintien 8. Celle-ci comporte des lames flexibles 14 constituées par découpe des plaquettes entrecroisées constituant la grille. Le bouchon comporte une gorge 15 dans laquelle les lames flexibles 14 viennent s'insérer pour maintenir latéralement et axialement les crayons combustibles. Ce dispositif permet un maintien du crayon suffisant pour n'avoir à implanter ce système que sur un seul niveau de grille comme sur un assemblage de la présente invention. Il n'y a pas, en effet, d'effets de relaxation aussi prononcés que ceux qu'on en enregistre sur les moyens de maintien des crayons connus comportant une lame flexible ou un ressort solidaire de la grille et plaquant le crayon sur des appuis ou bossettes également prévus sur la grille.

Lors du fonctionnement, la raideur axiale des lames leur permet de résister aux sollicitations axiales provenant du poids, de la poussée d'Archimède et de la poussée hydraulique. L'effort exercé par la lame flexible s'adapte à la sollicitation. La précharge est faible d'où le gain à la relaxation. Les lames-ressorts peuvent être implantées dans des plans décalés axialement de manière à assurer un meilleur encastrement et amoindrir les vibrations des crayons.

## Revendications

1. Assemblage combustible (1) pour réacteur nucléaire comprenant un squelette comportant deux pièces d'extrémité (2, 3) liées par des éléments allongés (4) tels que des tubes-guides et plusieurs grilles comprenant une grille extrême supérieure (5), une grille extrême inférieure (6) et des grilles intermédiaires (7), lesdites grilles formant des cellules de maintien d'un faisceau de crayons (9) de combustible aux noeuds d'un réseau régulier, chacun desdits crayons étant muni d'une gaine métallique fermée à chacune de ses extrémités par un bouchon (10) apte à coopérer avec la grille extrême correspondante, caractérisé

en ce que l'une des deux grilles extrêmes (5,6) est solidaire des bouchons (10) d'une des extrémités des crayons (9) du faisceau qui la traverse et est liée aux éléments allongés (4) constituant ainsi un point fixe à l'une des extrémités desdits crayons,

en ce que l'autre des deux grilles extrêmes (5,6) est solidaire des bouchons (10) à l'autre extrémité des crayons (9) du faisceau et est apte à coulisser librement sur les éléments allongés (4), et

en ce que les grilles intermédiaires (7) sont fixées auxdits éléments allongés (4) et propres à laisser coulisser librement les crayons puissent s'allonger librement à partir du point fixe.

2. Assemblage selon la revendication 1, caractérisé en ce qu'au moins un des bouchons (10) de chaque crayon (9) du faisceau comporte une gorge (15) et en ce que les cellules de maintien dudit faisceau de la grille extrême apte à coopérer avec lesdits bouchons comportent au moins une lame flexible (14) propre à venir s'insérer dans ladite gorge (15).

3. Assemblage selon la revendication 1, caractérisé en ce qu'une des extrémités des crayons (9) est liée à la grille extrême correspondante par friction.

4. Assemblage selon la revendication 2, caractérisé en ce que les cellules de maintien du faisceau de crayons de la grille extrême apte à coopérer avec les bouchons (10) munis d'une gorge (15) comportent deux lames flexibles (14) en opposition propres à venir s'insérer dans ladite gorge.

5. Assemblage selon l'une quelconque des revendication précédentes caractérise en ce que la grille extrême solidaire des bouchons (10) d'une extrémité des crayons (9) du faisceau et liée aux éléments allongés est la grille extrême inférieure (6).

6. Assemblage selon l'une quelconque des revendications précédentes, caractérisé en ce que les grilles intermédiaires (7) et la grille d'extrémité apte à coulisser librement sur les éléments allongés (4) sont constituées en Zircaloy et la grille d'extrémité fixée aux éléments allongés (4) est en Inconel.

7. Application d'une assemblage selon l'une quelconque des revendications précédentes à un réacteur nucléaire à eau légère sous pression.

## Claims

1. Fuel assembly (1) for nuclear reactor comprising a framework including two end parts (2,3) joined by elongaged elements (4) such as guide tubes and several grids comprising an upper end grid (5), a lower end grid (6) and intermediate grids (7), said grids forming supporting cells for a bundle of fuel elements (9) at the nodes of a regular lattice, each of said elements being provided with a metal sheath closed at each of its ends by a plug (10) adapted to cooperate with the corresponding end grid, characterized in that

one of the two end grids (5,6) is fast with the plugs (10) of one of the ends of the elements (9) of the bundle which passes through it and is joined to the elongated elements (4), thus constituting a fixed point at one of the ends of said elements,

in that the other of the two end grids (5,6) is fast with the plugs at the other ends of the elements (9) of the bundle and is adapted to slide freely over the elongated elements (4) and,

in that intermediate grids (4) are fixed to said elongated elements (4) and adapted to allow the elements (9) of the bundle to slide freely, so that the fuel elements can lengthen freely from the fixed point.

2. Assembly according to Claim 1, characterized in that at least one of the plugs (10) of each element (9) of the bundle comprises a groove (15) and in that the cells supporting said bundle in the end grid adapted to cooperate with said plugs comprise at least one flexible blade (14) adapted to be inserted in said groove (15).

3. Assembly according to Claim 1, characterized in that one of the ends of the elements (9) is joined to the corresponding end grid by friction.

4. Assembly according to Claim 2, characterized in that the supporting cells of the element bundle in the end grid adapted to cooperate with the plugs (10) provided with a groove (15) comprise two flexible blades (14) in opposition, adapted to be inserted in said groove.

5. Assembly according to Claim 1, characterized in that the end grid fast with the plugs (10) of one end of the elements (9) of the bundle and joined to the elongated elements is the bottom end grid (6).

6. Assembly according to any one of the preceding claims, characterized in that the intermediate grids (7) and the end grid adapted to slide freely on the elongated elements (4) are constituted of Zircaloy and the end grid fixed to the elongated elements (4) is of Inconel.

7. Application of an assembly according to any one of the preceding claims to a pressurized light water nuclear reactor.

## Patentansprüche

1. Kernbrennstabelement (1) für einen Kernreaktor, mit einem Gerüst, das zwei durch längliche Elemente (4), wie etwa Rohrführungen, verbundene Endstücke (2, 3) und eine Mehrzahl von Gittern, zu denen ein oberes Endgitter (5), ein unteres Endgitter (6) und Zwischengitter (7) gehören, aufweist, wobei die Gitter an den Knotenpunkten eines regelmäßigen Gitternetzes Haltezellen eines Bündels von Kernbrennstäben (9), von denen jeder Kernbrennstab mit einer metallischen Umhüllung versehen ist, die an jedem ihrer Enden mit einem Abschluß (10) versehen ist, der geeignet ist, mit dem jeweiligen Endgitter zusammenzuwirken, bilden,
   **dadurch gekennzeichnet, daß**
   - eines der beiden Endgitter (5,6) mit den einen Abschlüssen (10) des einen Endes der Kernbrennstäbe (9) des Bündels, das das Gitter durchdringt, fest verbunden ist und mit den länglichen Elementen (4) verbunden ist, und so einen festen Punkt am einen der Enden der Kernbrennstäbe bildet,
   - das andere der Endgitter (5,6) mit den Abschlüssen (10) am anderen Ende der Kernbrennstäbe (9) des Bündels fest verbunden und geeignet ist, an den Längselementen (4) frei entlang zu gleiten, und
   - die Zwischengitter (7) an den Längselementen (4) angebracht und geeignet sind, die Kernbrennstäbe (9) des Bündels frei gleiten zu lassen, damit sich die Kernbrennstäbe vom festen Punkt aus frei ausdehnen können.

2. Kernbrennstabelement nach Anspruch 1,
   **dadurch gekennzeichnet,**
   daß wenigstens einer der Abschlüsse (10) jedes Kernbrennstabes (9) des Bündels eine Hohlkehle (15) aufweist, und daß die Haltezellen des Endgitters für das Bündel, die zum Zusammenwirken mit den Abschlüssen geeignet sind, wenigstens eine Blattfeder (14) aufweisen, die geeignet ist, mit der Hohlkehle in Eingriff zu kommen.

3. Kernbrennstabelement nach Anspruch 1,
   **dadurch gekennzeichnet,**
   daß das eine der Enden der Kernbrennstäbe (9) mit dem entsprechenden Endgitter durch Reibung verbunden ist.

4. Kernbrennstabelement nach Anspruch 2, **dadurch gekennzeichnet,** daß die Haltezellen des Endgitters für das Kernbrennstabbündel, die geeignet sind, mit den mit einer Hohlkehle (15) versehenen Abschlüssen (10) zusammenzuwirken, zwei einander gegenüberliegende Blattfedern (14), die geeignet sind, mit der Hohlkehle in Eingriff zu kommen, aufweisen.

5. Kernbrennstabelement nach einem der vorstehenden Ansprüche, **dadurch gekennzeichnet,** daß das mit den Abschlüssen (10) des einen Endes der Kernbrennstäbe (9) des Bündels fest verbundene und mit den länglichen Elementen verbundene Endgitter das untere Endgitter (6) ist.

6. Kernbrennstabelement nach einem der vorstehenden Ansprüche, **dadurch gekennzeichnet,** daß die Zwischengitter (7) und das zum freien Gleiten auf den Längselementen (4) geeignete Endgitter aus Circaloy und das an den Längselementen (4) fest angebrachte Endgitter aus Inconel bestehen.

7. Anwendung eines Kernbrennstabelements gemäß eines der vorstehenden Ansprüche auf einen Leichtwasserdruckkernreaktor.

# FIG.1.

# FIG.3.

# FIG.2.